# FASCICULE DE BREVET EUROPEEN

(11) **EP 1 738 578 B1**
(45) Date de publication et mention de la délivrance du brevet: **31.05.2017**
(21) Numéro de dépôt: 05718779.1
(22) Date de dépôt: 21.04.2005
(51) Int. Cl.: H04N 5/00

(54) **METHODE DE TRAITEMENT DE CONTENUS DESTINES A LA DIFFUSION**
VERFAHREN ZUM VERARBEITEN VON ZUR AUSSTRAHLUNG BESTIMMTEN INHALTEN
METHOD FOR PROCESSING CONTENTS INTENDED FOR BROADCASTING

(30) Priorité: 22.04.2004 CH 696042004
(43) Date de publication de la demande: 03.01.2007
(73) Titulaire: Nagravision SA, 1033 Cheseaux-sur-Lausanne (CH)
(72) Inventeur: COLLET, Jean-François, F-01220 Divonne-les-Bains (FR); BRENDER, Olivier, CH-1110 Morges (CH)
(74) Mandataire: Leman Consulting S.A.
(86) Numéro de dépôt international: PCT/IB2005/051302
(87) Numéro de publication internationale: WO 2005/104528

(56) Documents cités:
- EP-A- 1 274 243
- EP-A2- 1 418 756
- WO-A-02/058398
- WO-A1-00/45552
- US-A1- 2003 140 340
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936
- GUILLOU L C ET AL: "ENCIPHERMENT AND CONDITIONAL ACCESS" SMPTE JOURNAL, SMPTE INC. SCARSDALE, N.Y, US, vol. 103, no. 6, 1 juin 1994 (1994-06-01), pages 398-406, XP000457575 ISSN: 0036-1682

## Description

La présente demande concerne le domaine de la diffusion de contenu vidéo à la demande, en particulier le domaine des serveurs vidéos.

Le développement de la demande de diffusion de produits vidéos spécifiques a ouvert un nouveau marché, grâce à la disposition de bande passante de plus en plus grande. Ainsi, il est possible de diffuser un film à un utilisateur via sa ligne téléphonique, en utilisant par exemple la technique DSL (Digital Subscriber Line). Des vitesses de l'ordre de 2 à 3 Mbits/sec sont aujourd'hui possibles.

Dans ce but, des serveurs vidéos sont capables de gérer un grand nombre de lignes vers des utilisateurs, chaque ligne diffusant un contenu différant.

Ces serveurs ont accès à une base de contenus qui représente des capacités de stockage gigantesques. Ces serveurs sont gérés par un module de gestion qui dispose des données sur chaque utilisateur des lignes à haut débit et traite des données d'autorisation et de facturation. Ce module de gestion pilote le serveur vidéo pour l'informer de quel contenu doit être diffusé sur chaque ligne.

Ces serveurs ont été initialement conçus pour un contenu en clair, c'est-à-dire non crypté. On considérait que du fait que le destinataire était clairement identifié, la gestion de son compte était faite par le module de gestion de façon central et non d'une manière locale sur le décodeur de l'utilisateur. L'utilisation d'un contenu diffusé est en général unique et les copies ne sont pas autorisées. Les possibilités de copie illicite d'un contenu dûment acquis par un utilisateur ont poussé les diffuseurs à introduire une couche de protection des données par cryptage.

De façon bien connue, pour pouvoir visionner un contenu, tel qu'un film, un événement sportif ou un jeu notamment, plusieurs flux sont diffusés à destination d'une unité multimédia, par exemple un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Dans les deux cas, on ajoutera dans le message de contrôle ECM une date permettant de gérer la période d'utilisation de ce contenu.

Pour permettre la diffusion d'un contenu crypté, le contenu en clair est transmis à un module d'encryption qui va retourner deux fichiers, soit le contenu crypté et un fichier contenant l'ensemble des clés d'encryption (mots de contrôle).

Pour transformer un serveur vidéo diffusant des contenus en clair en un serveur diffusant des contenus cryptés, il doit exécuter de nombreuses opérations soit:
- transmettre les mots de contrôle à un générateur d'ECM, ce dernier va ajouter la date et éventuellement les conditions d'accès au contenu,
- recevoir les ECM en retour,
- synchroniser la diffusion des ECM avec la diffusion du contenu.

Ces opérations sont certes possibles, mais impliquent des temps de développements longs et un comportement particulier du serveur vidéo, comportement qui peut être spécifique à chaque opérateur en charge de la sécurité.

Les documents EP 1 274 243 et US 2003/0140340 illustrent parfaitement cette problématique. En effet, le contenu est pré-encrypté et diffusé à la demande. Lors d'une telle demande, le flux d'ECM est préparé et transmis à ce moment là. Le serveur VOD est toujours associé à ces opérations et est en charge de diffuser les ECM avec le contenu pré-encrypté. Les deux flux, soit les ECM et le contenu, sont indépendants l'un de l'autre et sont traités séparément.

Le but de la présente invention est de proposer une solution souple et légère pour sécuriser les contenus transmis par des serveurs vidéos vers un ou plusieurs utilisateurs.

Ce but est atteint par une méthode de traitement de contenus destinés à la diffusion, cette méthode comprenant les étapes suivantes précédant la diffusion :
- encryption du contenu par une pluralité de mots de contrôle (CW),
- réservation d'emplacements destinés à recevoir un message de contrôle (ECM) dans le contenu encrypté,
- marquage de chaque emplacement avec une information de localisation dans le contenu,
- stockage d'un fichier de clés comprenant les mots de contrôle,
et lors de la diffusion :
- transmission du contenu encrypté au serveur vidéo,
- transmission du fichier des clés à un générateur de messages de contrôle,
- diffusion du contenu encrypté par le serveur vidéo,
- interception de la sortie du serveur vidéo par un module de remplacement,
- détection, par le module de remplacement, des emplacements des messages de contrôle dans le flux du contenu diffusé,
- application des messages de contrôle (ECM) aux emplacements prévus à cet effet par le module de remplacement.

Le point important dans cette méthode est la préparation du contenu pré-encrypté en laissant des emplacements vides pour les futurs messages de contrôle ECM. Cette caractéristiques n'est pas divulguée dans les documents de l'état de la technique. De plus, ceci permet de traiter le flux du contenu pré-encrypté directement lors de la diffusion dans un module complètement indépendant du serveur de diffusion lui-même.

Grâce à cette méthode, on peut considérer que le serveur vidéo ne se préoccupe en rien de la sécurité et qu'il ne fait que diffuser un contenu. Du fait que la place est prévue dans le contenu pour y insérer les messages de contrôle, ceux-ci sont préparés lors de la diffusion et sont insérer dans le flux à la volée.

Chaque emplacement réservé dans le contenu comprend un index qui permet de définir le message de contrôle qui sera remplacé à cet endroit, compte tenu des mots de contrôle en vigueur à cet instant.

En effet, il est important que les mots de contrôle soient placés au bon endroit afin qu'ils soient synchronisés avec le contenu.

L'invention sera mieux comprise grâce à la description détaillée qui va suivre et qui se réfère aux dessins annexés qui sont donnés à titre d'exemple nullement limitatif, dans lesquels:
- la figure 1 illustre les différents modules de l'invention,
- la figure 2 illustre un message de remplacement,
- la figure 3 illustre le détail du module de remplacement.

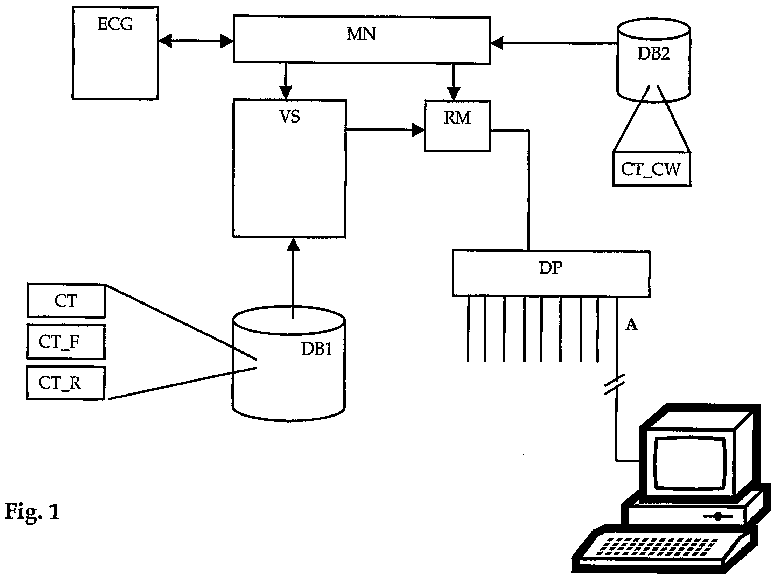

Comme illustré sur la figure 1, le serveur vidéo VS est le coeur de cet ensemble. Il est directement relié à sa mémoire de masse DB1 qui peut être de plusieurs natures tels que bandes, disques optiques ou disques durs. Il dispose généralement de l'équivalent d'un juke-box avec tous les contenus (films) proposés à la diffusion.

Le module de gestion MN est en charge de la gestion de l'ensemble. Il reçoit les requêtes des utilisateurs, détermine leurs droits et s'occupe de la facturation. De plus, une fois une requête utilisateur acceptée, il informe le serveur VS du contenu CT à diffuser et de l'identifiant de transmission. Selon notre exemple, le fichier des clés CT_CW est stocké dans une base de données DB2 associée au module de gestion.

Parallèlement, le gestionnaire MN va transmettre le fichier des clés CT_CW au générateur ECG de messages de contrôle. Ce générateur est en charge de recevoir un mot de contrôle CW et de préparer un message ECM. Il est à noter que le mot de contrôle CW est de préférence stocké sous forme encryptée et que seul le générateur ECG dispose de la clé pour décrypter le mot de contrôle CW ainsi que de la clé nécessaire à la préparation d'un message de contrôle ECM.

Le message ECM comprend de préférence la date courante et d'autres informations utiles tels que l'identifiant du destinataire par exemple. Il est possible d'ajouter une encryption personnalisée au mot de contrôle CW pour tenir compte d'une clé unique et personnelle au récepteur. Dans ce cas, le gestionnaire MN indique le numéro unique de récepteur afin que le générateur de message puisse retrouver la clé personnelle de ce récepteur.

Ce message est ensuite transmis au module de remplacement RM qui est placé juste à la sortie du serveur vidéo. Ce module est également informé de l'identifiant de l'utilisateur ou de la ligne de diffusion afin de pouvoir discriminer les données destinées à un utilisateur.

Le fonctionnement de ce module de remplacement RM, bien que simple, nécessite des puissances de traitement élevées. En effet, la sortie du serveur vidéo peut atteindre des vitesses importantes du fait que le serveur peut diffuser vers un grand nombre d'utilisateurs en même temps.

Le rôle du module de remplacement RM est de scruter le flux sortant du serveur et de détecter les emplacements de messages de contrôle ECM. Pour simplifier le travail du remplacement, la taille des emplacements est la même que les messages de contrôle.

Une fois un tel emplacement détecté, le message de contrôle vient remplacer la marque. Dans une variante de réalisation, la marque est indépendante de l'emplacement prévu pour le message de contrôle.

Une caractéristique de l'invention est que la taille des données à diffuser ne varie pas, seul un emplacement vide est rempli lors de la diffusion.

Le module RM est ici placé sur la sortie du serveur vidéo qui est commune à plusieurs utilisateurs. Selon une autre forme de réalisation, il peut être placé à la sortie du module de multiplexage DP au niveau de chaque faisceau utilisateur.

Selon un mode de réalisation simplifié, le message de contrôle ECM contient le mot de contrôle CW et la date courante. Il est donc indépendant du destinataire final.

Le module de remplacement RM scrute le flux sortant du serveur vidéo et détecte les emplacements pour les messages de contrôle. Dans le cas où le module RM est placé sur le flux commun à plusieurs utilisateurs, il existe deux moyens pour déterminer quels sont les mots de contrôle qui sont destinés à être remplacés à un endroit donné. Selon un premier moyen, les emplacements sont numérotés consécutivement sans rapport avec le contenu. Le gestionnaire MN informe le module RM que le flux concernant la sortie A du demultiplexeur DP concerne l'ensemble des mots de contrôle CW_A. Le module va donc détecter deux paramètres, soit l'identifiant de l'utilisateur final (sortie A dans notre exemple) et l'emplacement du message de contrôle.

Selon un autre mode de réalisation, l'emplacement pour le message de contrôle comprend deux paramètres, à savoir l'indice du mot de contrôle CW et une indication identifiant de contenu. En effet, chaque contenu CT est identifié par un identifiant unique. Lors du lancement, par le gestionnaire MN, de la diffusion d'un contenu CT, le gestionnaire communique non seulement le fichier des messages de contrôle ECM, mais également l'identifiant du contenu au module de remplacement.

Ainsi, ce dernier n'a plus qu'à détecter les emplacements des messages de contrôle et grâce à l'identifiant, va permettre de pointer sur la bonne table de messages de contrôle.

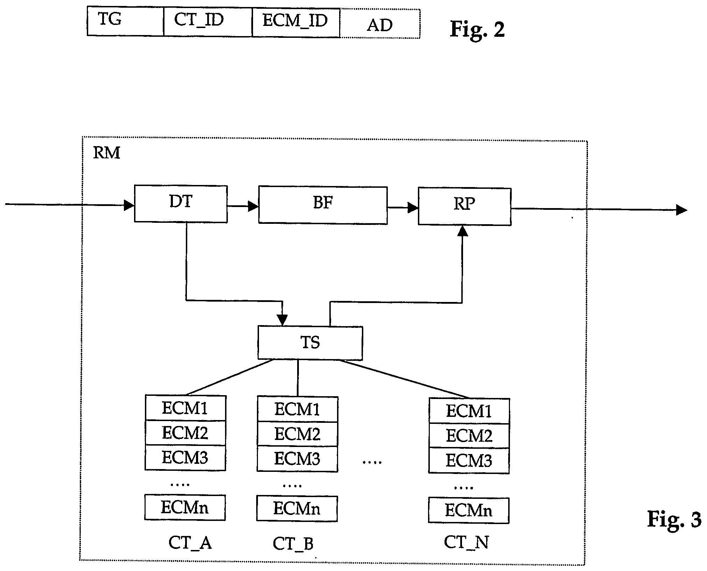

La composition d'un emplacement réservé est illustrée par la figure 2. Un premier champ TG identifie un tel emplacement. C'est en fait une marque de repérage. Le champ suivant CT_ID indique l'identifiant du contenu CT. Il permet de faire le lien avec l'ensemble des mots de contrôle CW. Le dernier champ est l'index ECM_ID de mot de contrôle en cours. Il détermine quel mot de contrôle est en cours d'utilisation et quel est le prochain mot de contrôle. Selon cet exemple, il est prévu de remplacer cet emplacement réservé par le message de contrôle lors de la diffusion. C'est pourquoi un champ AD ajuste la taille afin que l'emplacement soit de la même taille que le message de contrôle.

Il est à noter qu'un message de contrôle contient deux mots de contrôle, le mot courant ainsi que le prochain mot de contrôle afin de permettre une transition automatique lors du changement de mot de contrôle.

En référence à la figure 3, le message ECM1 va contenir les mots CW1 et CW2, le premier mot CW1 étant le mot en cours d'utilisation et le CW2 est le mot actif lors de la prochaine crypto-période. De la même manière, le message ECM2 contiendra le mot CW2 et CW3.

L'identifiant CT_ID du contenu permet au module TS de sélectionner la bonne table de messages. Selon notre exemple, le module de détection capture l'identifiant du contenu CT_ID et l'index de message, ces deux informations permettant au pointeur de table TS de déterminer le bon contenu (CT_A, CT_B ... CT_N) et de retourner le bon message. Ce message est transmis au module de substitution RP qui remplace le message de remplacement par le message ECM, et le flux peut être diffusé. Un module optionnel de retard BF est placé entre les deux modules afin de permettre aux opérations décrites ci-dessus de s'exécuter. Dans la pratique, ce retard est très court, de quelques microsecondes.

Dans le cas d'avance ou retour rapide, certaines précautions doivent être prises, en particulier pour ce qui concerne le retour rapide.

En effet, selon le principe que chaque message comprend le mot courant et le mot suivant, en cas de retour en arrière, il faudra transmettre le mot courant et le mot précédent.

Selon l'exemple illustré à la figure 1, trois contenus sont pré-encryptés, à savoir le contenu complet CT, le contenu en avance rapide CT_F et le contenu en retour rapide CT_R. Si le traitement du contenu normal et rapide répond aux mêmes critères, le contenu retour rapide CT_R est différent du fait que l'index de message ECM_ID est inférieur de 1 par rapport aux autres contenus. Pour la crypto-période 10 par exemple, il faudra transmettre l'ECM index 9 qui comprend le mot CW 9 et le CW 10.

Dans le cas normal (contenu CT ou CT_F), la même crypto-période aurait été associée au message ECM 10 qui comprend le mot de contrôle CW 10 et le mot de contrôle CW 11 relatif à la prochaine crypto-période.

Pour des serveurs vidéo qui ne disposent pas de contenus spécifiques aux opérations d'avance et retour rapide, il est important que le module de remplacement RM reçoive l'information de la direction afin d'opérer automatiquement l'opération suivante:

```
 Si Direction = "Retour" alors ECM = ECM(ECM_ID-1)
 sinon, ECM = ECM(ECM_ID).
```

Selon un mode simplifié de l'invention, les messages de contrôle ECM sont transmis en clair. On souhaite uniquement encrypter (ou mélanger) chaque mot de contrôle avec une clé propre au récepteur. On peut dès lors imaginer des récepteurs simples, sans modules de sécurité, mais qui ont une clé unique dans la partie décodeur. Chaque mot de contrôle est encrypté par cette clé unique. Le module de remplacement va donc insérer dans le flux non plus un message de contrôle, mais le mot de contrôle courant encrypté par la clé unique du récepteur.

## Revendications

1. Méthode de traitement de contenus destinés à la diffusion, cette méthode comprenant les étapes suivantes précédant la diffusion :
- encryption du contenu par une pluralité de mots de contrôle (CW),
- réservation d'emplacements destinés à recevoir un message de contrôle (ECM) dans le contenu encrypté,
- marquage de chaque emplacement avec une information de localisation dans le contenu, la taille des emplacements étant la même que la taille du **message de contrôle** (ECM)
- stockage d'un fichier de clés comprenant les mots de contrôle,
et lors de la diffusion :
- transmission du contenu encrypté au serveur vidéo,
- transmission du fichier des clés à un générateur de messages de contrôle,
- diffusion du contenu encrypté par le serveur vidéo,
- interception du flux diffusé par un module de remplacement,
- détection, par le module de remplacement, des emplacements des messages de contrôle dans le flux du contenu diffusé,
- application des messages de contrôle (ECM) aux emplacements détectés par le module de remplacement.

2. Méthode selon la revendication 1, **caractérisée en ce que** l'information de localisation comprend une description du contenu.

3. Méthode selon la revendication 1 ou 2, **caractérisée en ce que** l'information de localisation comprend l'indice du mot de contrôle (cw) utilisé à cet emplacement.

4. Méthode selon les revendications 1 à 3, **caractérisée en ce que** le module de remplacement (RM) dispose d'une pluralité de messages de contrôle (ECM) associés à des contenus différents, et **en ce que** ce module extrait de l'emplacement réservé l'identifiant du contenu en cours de traitement et sélectionne les messages de contrôle (ECM) relatif audit contenu.

## Patentansprüche

1. Verfahren zum Verarbeiten von zur Ausstrahlung bestimmten Inhalten, wobei dieses Verfahren vor der Ausstrahlung die folgenden Schritte umfasst:
- Verschlüsselung des Inhalts durch eine Vielzahl von Kontrollwörtern (CW),
- Reservierung von Standorten, die eine Kontrollnachricht (ECM) in dem verschlüsselten Inhalt empfangen sollen,
- Markierung jedes Standorts mit einer Lokalisierungsinformation in dem Inhalt, wobei die Größe der Standorte dieselbe wie die Größe der Kontrollnachricht (ECM) ist
- Speicherung einer Datei von Schlüsseln, die die Kontrollwörtern umfassen,
und, bei der Ausstrahlung:
- Übertragung des verschlüsselten Inhalts an den Videoserver,
- Übertragung der Datei der Schlüssel an einen Generator von Kontrollnachrichten,
- Ausstrahlung des verschlüsselten Inhalts durch den Videoserver,
- Abfangen des ausgestrahlten Stroms durch ein Ersatzmodul,
- Ermittlung, durch das Ersatzmodul, der Standorte der Kontrollnachrichten in dem ausgestrahlten Strom des Inhalts,
- Anwendung der Kontrollnachrichten (ECM) an den ermittelten Standorten durch das Ersatzmodul.

2. Verfahren nach Anspruch 1, **dadurch gekennzeichnet, dass** die Lokalisierungsinformation eine Beschreibung des Inhalts umfasst.

3. Verfahren nach Anspruch 1 oder 2, **dadurch gekennzeichnet, dass** die Lokalisierungsinformation den Index des Kontrollwortes (CW) umfasst, das an diesem Standort benutzt wird.

4. Verfahren nach den Ansprüchen 1 bis 3, **dadurch gekennzeichnet, dass** das Ersatzmodul (RM) über eine Vielzahl von Kontrollnachrichten (ECM) verfügt, die mit verschiedenen Inhalten verbunden sind, sowie dadurch, dass dieses Modul aus dem reservierten Standort die Kennung des gerade behandelten Inhalts extrahiert und die Kontrollnachrichten (ECM) bezüglich des genannten Inhalts auswählt.

## Claims

1. Processing method of content intended for broadcasting, this method comprising the following steps preceding broadcasting:
- encryption of the contents by a plurality of control words (CW),
- reservation of locations intended to receive a control message (ECM) in the encrypted content,
- marking of each location with a location information in the content, the size of the locations being the same size of the control message (ECM),
- storage of a key file comprising the control words,
and at the time of broadcasting:
- transmission of the content encrypted at the video server,
- transmission of the key file to a control message generator,
- broadcasting of the content encrypted by the video server,
- interception of the stream broadcasted by a replacement module,
- detection, by the replacement module, of locations of control messages in the stream of the content transmitted,
- application of the control messages (ECM) at locations provided for that purpose by the replacement module.

2. Method according to claim 1, **characterized in that** the location information includes a description of the content.

3. Method according to claim 1 or 2, **characterized in that** the location information includes the indication of the control word (CW) used at this location.

4. Method according to claims 1 to 3, **characterized in that** the replacement module (RM) comprises a plurality of control messages (ECM) associated to different contents, and **in that** this module extracts from the marked location the identifier of the currently processes content and selects the control messages (ECM) relative to said content.
